# EUROPEAN PATENT SPECIFICATION

(11) **EP 0 278 049 B1**
(45) Date of publication and mention of the grant of the patent: **14.12.1994**
(21) Application number: 87111894.9
(22) Date of filing: 28.03.1983
(51) Int. Cl.: A01G 25/02

(54) **Drip irrigation system employing adjacently arranged flow-restricting passages**
Tropfbewässerungssystem mit nebeneinander liegenden und den Ausfluss begrenzenden Passagen
Système d'irrigation goutte à goutte au moyen de passages de courant restrictifs

(30) Priority: 01.04.1982 US 364213; 01.04.1982 US 364229
(43) Date of publication of application: 17.08.1988
(62) Divisional of application: 83103058.0
(73) Proprietor: Chapin, Richard Dexter, Watertown New York 13601 (US)
(72) Inventor: Chapin, Richard Dexter, Watertown New York 13601 (US)
(74) Representative: Casalonga, Axel

(56) References cited:
- GB-A- 1 596 233
- US-A- 4 247 051

## Description

This invention relates to a water distributing hose for use in a trickle irrigation or drip irrigation system particularly adapted for the surface or subsurface watering of long rows of crops, whether on greenhouse benches or in the field, and more specifically in a trickle irrigation system wherein the water is allowed to discharge slowly, directly at the desired point of application, normally about the base of the plants.

To be practical, trickle irrigation must provide for the delivery of water at a slow uniform rate over long lengths or runs of hose. In the past, various trickle irrigation systems have been tried, including pipes with small holes, pipes with various types of small outlet members, pipes with small tubes for outlets, plastic pipes with slits, tubes which ooze water through the wall, and hoses which ooze water through a sewn seam. Each type has depended on a small orifice, low pressure, friction created in a long outlet member such as a tube, or a combination of these to limit the flow through each individual outlet. However, there are disadvantages associated with each such known system. For example, the use of extremely small orifices such as holes, slits, or the like, tend to clog easily. Tube outlets and special outlet members are relatively expensive to produce and ship, particularly when considering the large quantities required. In addition, low pressure systems and tubes which provide for an oozing of the water through the wall are not capable of producing a uniform flow along the length of the hose or the like, particularly on sloping runs.

One water distributing hose which has met with success is that disclosed in U.S. Reissue Patent No. Re. 28,095, reissued July 30, 1974 to Chapin. In the reissue patent, a multi-chamber water distributing hose is shown in the context of a trickle irrigation system. Another hose which has met with success is that currently marketed by applicant under the name "TRI-WALL" hose. The "TRI-WALL" hose is an enlongated water distributing hose capable of effectively watering large areas with readily available water pressures and in a manner whereby an essentially uniform watering is achieved. The pressure is substantially maintained throughout the length of the hose through a stacked arrangement of first, second, and third fluid channels, which enable a maintaining of the relatively high pressure throughout the length of the hose and the reduction of this pressure directly at the point of the passing of the water from the high pressure first fluid channel through a series of first fluid-passing openings to the much smaller second fluid channel, and a further pressure reduction as the water passes within the third fluid channel between a series of second fluid-passing openings and a series of discharge fluid-passing openings.

Although the performance of all of the Chapin hoses has been excellent, there is, nevertheless, always a need for improved performance.

US-A-4 247 051 reveals, in the embodiment of Figures 1, 2 and 3, an irrigation hose made from an elongated flat sheet of flexible water-impervious material bent along its length to have its longitudinal margins overlapping. Two spaced continuous longitudinal ribs are disposed between the overlapping margins so as to define between said margins one continuous longitudinal flow-restricting passage. A continuous longitudinal main supply channel is defined inside the hose by said sheet material and the inner of said ribs. A series of longitudinally spaced inlets in the inner margin provides fluid communication between the main supply channel and the flow-restricting passage and a series of longitudinally spaced outlets in the outer margin provides fluid communication between the flow-restricting passage and the exterior of the hose.

The elongated fluid-distributing hose as claimed for use in a fluid-distributing system comprises: an elongated, water-impervious planar material having longitudinally extending margins, said material being folded upon itself to overlap said margins thus defining inner and outer margins; at least two longitudinally extending strip means disposed between and secured to said overlapping margins and each extending longitudinally over the full length of said hose, and positioned near to, but spaced from, the other, the longitudinal axis of each of said strip means being substantially parallel to and substantially equidistant from the longitudinal axis of said hose; a discrete main supply channel adapted for fluid communication with a source of fluid under pressure, a first of said strip means and said material defining said discrete main supply channel; at least one discrete elongated flow passage providing a flow-restricting passage which is continuous and uninterrupted throughout the full longitudinal length of said hose, said flow passage being disposed about the exterior of said main supply channel and being defined between said overlapping margins of the hose and said strip means a common wall made of said planar material, said wall being shared by said main supply channel and said discrete flow passage; a series of longitudinally spaced inlet means for providing fluid communication between said discrete main supply channel and said discrete elongated flow passage and a series of longitudinally spaced outlet means for passing fluid from said flow passage to the exterior of said hose. According to the invention, the hose comprises at least three strip means each extending longitudinally over the full length of said hose and defining at least two discrete elongated flow passages aligned in a common plane which are continuous and uninterrupted throughout the full longitudinal length of said hose and substantially parallel to and equidistant from the longitudinal axis of the hose and at least one of which is a flow-restricting passage. Said strip means include a first strip, at least one further strip and a first set of longitudinally extending discrete strips disposed end-to-end, the ends of said discrete strips being spaced from each other to define over the full length of said hose a series of longitudinally spaced fluid-passing stations between the one of said at least two flow passages formed in part by said first strip and said first set of strips and the at least one other of said at least two flow passages formed in part by said first set of strips and said at least one further strip. The said inlet means provide fluid communication between said discrete main supply channel and the said one flow passage and the said outlet means (66) provide fluid communication between the said at least one other flow passage and the exterior of said hose.

The hose of the present invention for use in an irrigation system for plants, vegetables, and the like enables the construction of a drip irrigation system which is relatively inexpensive while, at the same time, being capable of effectively watering large areas with readily available water pressures and in a manner whereby an essentially uniform watering is achieved. This desired uniform watering results notwithstanding sloping ground conditions and the like. Water pressure is substantially maintained throughout the length of the tube without requiring the use of extremely small orifices which easily clog from impurities, reliance instead being had on a particular arrangement of a main supply channel for gross water movement, and a water distributing network for fine water movement. The main supply channel exhibits relatively high water pressure throughout the length of the hose. A reduction of this pressure takes place in the water distributing network with the passing of the water from the high pressure main supply channel through a series of first fluid-passing openings or inlet stations to a much smaller first fluid-restricting passage and through at least one of fluid-passing stations to at least second fluid-restricting passage before being released to the exterior of the hose through a series of discharge fluid-passing openings or outlet stations. In certain embodiments, the flow-restricting passages include a flow-regulating structure.

The hose of the instant invention is preferably of a thin water-impervious plastic material, such as polyethylene. The main supply channel moves the water at a relatively high pressure along the full length of the hose for discharge into the water distributing network for final discharge out of the hose itself through a number of openings or outlet stations in the outer passage. The pressure decrease within the water distributing network is such that the flow of water at the outlet stations of the network is in the form of a drip under substantially quiescent conditions.

Advantages of the present invention include the provision of a system which can be inexpensively produced, such being essential because of the vast quantities of hose needed to irrigate field crop installations which typically involve thousands of acres. The system is compact, the hose capable of being flattened and rolled, thereby simplifying the handling, storage, shipping, installation and removal. The hose used is of a highly durable nature. In addition, large areas can be simultaneously watered without requiring excessively high pressures or large volumes of water with the distribution of the water being uniform over extremely long lengths as well as on sloping layouts and in both surface and subsurface installations.

These, together with other features and advantages which will become subsequently apparent, reside in the details of construction and operation as more fully hereinafter described and claimed, reference being had to the accompanying drawings forming a part hereof, wherein like numerals refer to like parts throughout.

Figure 1 is a perspective view showing a portion of a field making use of the irrigation system of the present invention.

Figure 2 is a perspective view of a portion of a hose embodying the teachings of the subject invention.

Figure 3 is a section taken along lines 3-3 of Figure 2.

Figure 4 is a view similar to that of Figure 2 with a portion of the hose removed to reveal the interior structure of the flow-restricting passages.

Figure 5 is a schematic view of a second embodiment of a hose incorporating the teachings of the present invention.

Figure 6 is a schematic view useful in explaining the operation of the hose of Figure 4.

Figure 7 is a view taken along lines 7-7 of Figure 6.

Figure 8 is a view taken along lines 8-8 of Figure 6.

Figure 9 is a cross-sectional view of the embodiment of Figure 6.

Figure 10 is yet another embodiment of a hose incorporating the teachings of the subject invention.

Figure 11 is a schematic diagram used to help explain the operation of the embodiment of Figure 10.

Figure 12 is a schematic diagram of still another embodiment of a hose incorporating the teachings of the subject invention.

Figure 13 illustrates yet another embodiment of a hose adopting the teachings of the subject invention.

Figure 14 shows a modification made to the embodiment of Figure 1.

Figure 15 is a view taken alone lines 15-15 of Figure 14.

Figures 16 and 17, in partial cross section, show yet another modification to the embodiment of Figure 2.

Figure 18 is a perspective view of a portion of a hose embodying the further teachings of the subject invention.

Figure 19 is a view similar to that of Figure 18 with a portion of the hose and thermoplastic sheet removed to reveal the interior structure of the flow restricting passages.

Figure 20 is a section taken along lines 20-20 of Figure 18.

Figure 21 is a perspective view showing a thermoplastic sheet with ridges for use in creating the hose of Figure 19.

Figure 22 is a schematic view of another embodiment of the hose of Figure 19.

Figure 23 is a plan end view of the hose of Figure 19.

Figure 24 is a plan end view of the hose of Figure 19 howing the hose expanded.

Figure 25 is a schematic view useful in explaining the operation of the hose of Figure 19.

In describing a preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

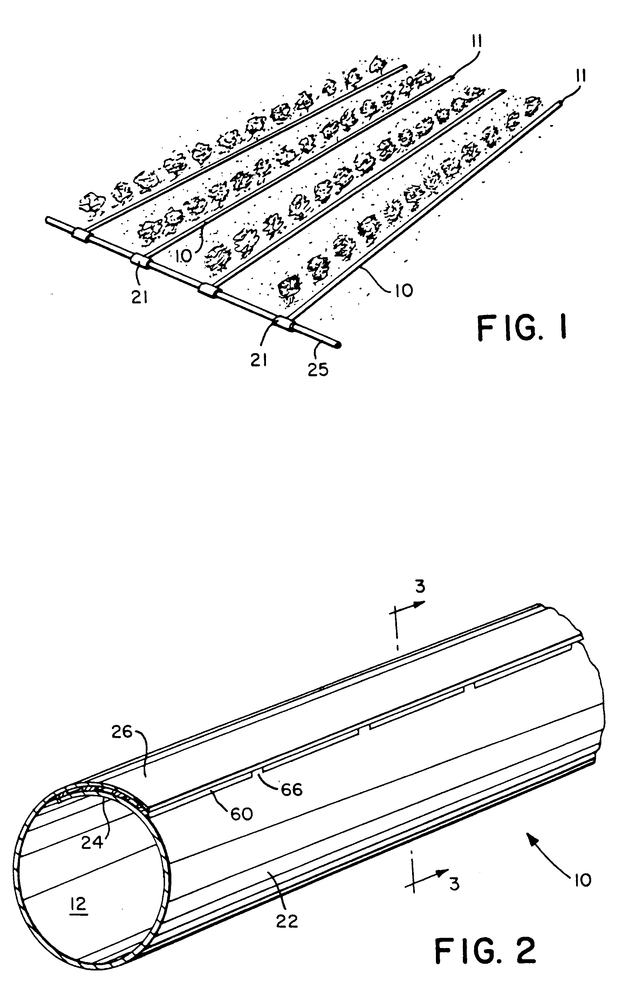

With reference to Figures 1-4, reference 10 is used to generally designate the water distributing hose embodying the teachings of the present invention. The hose 10 basically comprises a gross water distributing channel 12 and a fine water distributing network 14. Adjacent to channel 12 and sharing a common wall 16 is the network 14, which basically comprises a plurality of flow-restricting passages 18-20, positioned one next to the other in a common curved plane and disposed about the exterior of the main supply channel 12. Each of the passages is substantially equidistant from the longitudinal axis A of the main supply channel. As can be seen, the three fluid passages 18-20 are arranged in a generally parallel relationship throughout the length of the hose.

In use, the main supply channel 12 is connected to a source of pressurized water. This can be effected, for example, by connecting the main supply channel 12 at one end of hose 10 to a suitable fitting 21 in main 25. The other end 11 of the hose 10 is closed off to prevent escape of water from the hose. Such an arrangement has been generally illustrated in Figure 1 wherein the hose 10 is illustrated next to rows of vegetables in a large field. It will be appreciated that such an arrangement is also equally adaptable for use in greenhouses and home gardens.

With reference to Figures 2 through 4, an elongated layer or sheet 22 of thin water-impervious plastic material, such as a thermoplastic film, terminates in two longitudinally extending margins 24 and 26 which overlap each other in a predetermined fashion. Interposed between the overlapping margins are a series of elongated longitudinally extending strips of varying lengths and arranged in a particular manner, yet to be described, to define the fine water-distributing network 14. The strips are also made from a water-impervious plastic material.

A first set of strips 30 are positioned near the edge 32 of margin 24, so that each of the strips define an axis substantially parallel to and equidistant from the longitudinal axis A of the hose 10. The ends 34 of the strips are periodically spaced from each other to define inlet stations as a series of fluid-passing openings 36 therein. The frequency of the inlet stations typically ranges from a few inches to several feet throughout the full length of the hose. The inlet stations or first fluid-passing openings 36 are positioned so that they form a means of fluid communication between the main supply channel 12 and the first flow-restricting passage 18 of the network 14. The spaces between the strips 30 define the first inlet stations 36, and the strips 30, in effect, define a common wall 33 between the main supply channel 12 and the passage 18.

In like manner, a second set of strips 40 is positioned near to, but spaced from, the wall 33 defined by strips 30. The second set of strips also has its ends 44 spaced from each other to define a further set of fluid-passing openings or inlet stations 46, to form a means of fluid communication between the first passage 18 and the second flow-restricting passage 19. Thus, the second fluid-passing openings 46 are positioned somewhere along the common wall 43 between the first and second passages 18 and 19 as defined by the strips 40. The second fluid-passing openings 46 generally have substantially the same spacing between them as the spacing formed between the first fluid-passing openings or inlet stations 36. In actual practice, the spacing of the second fluid-passing openings 46 can vary from a few inches up to several feet.

Additionally, a third set of strips 50 is positioned near to, but spaced from, the wall 43 defined by strips 40. The third set of strips also has its ends 54 spaced from each other to define a third set of fluid-passing openings or inlet stations 56 to form a means of fluid communication between the second passage and the third flow-restricting passage 20. Thus, the third fluid-passing openings 56 are positioned somewhere along the common wall 53 between the second and third passages 19 and 20 as defined by the strips 50. The third fluid-passing openings 56 generally have substantially the same spacing between them as the spacing formed between the first fluid-passing openings 36.

Finally, a fourth set of strips 60 is positioned near the edge 62 of the margin 26 so that the strips define an axis substantially parallel to the longitudinal axis A of the hose 10. The placement of the strips 60 is such that they are positioned near to, but spaced from, the wall 53 defined by strips 50. The ends 64 of the strips are spaced from each other to define a fourth series of fluid discharge openings or outlet stations 66 to provide for fluid communication between the third passage and the exterior of the hose. In the preferred embodiment, the spacing between the outlet stations 66 is substantially the same as that between the third inlet stations 56.

In the preferred embodiment, the inlet and outlet stations 36, 46, 56, and 66, which may also be referred to as cross passageways, are substantially of a rectangular cross section and precisely formed by the positioning of the strips between the overlapping margins 24 and 26. The size of the outlets at each station is chosen so that there is a minimum chance of clogging as water passes through the station.

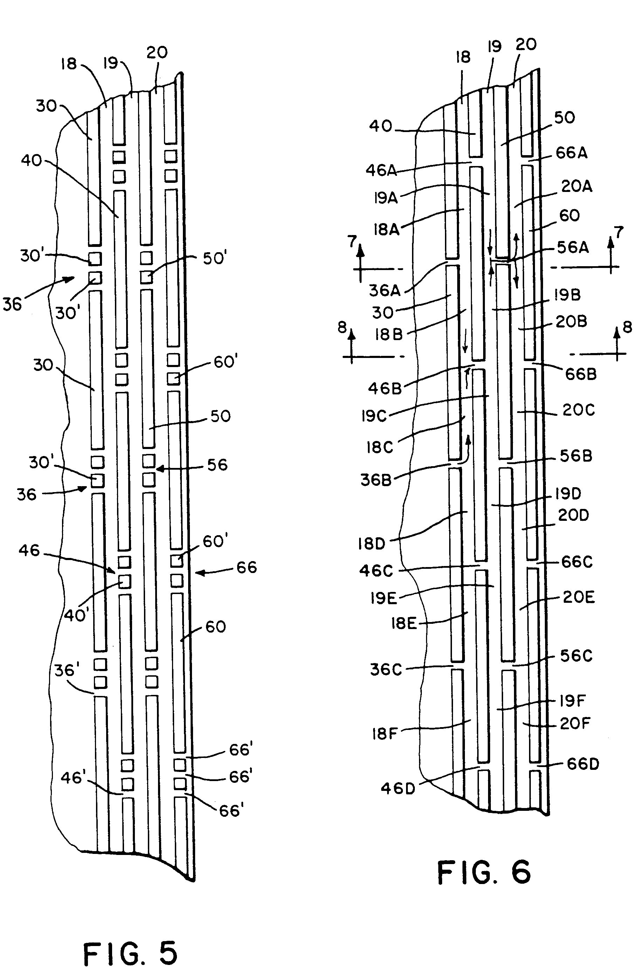

For the purposes of simplifying the presentation, the fluid-passing stations 36, 46, 56, and 66 in Figures 1-4 are shown in the context of a less preferred embodiment as a single opening. However, in a more preferred embodiment, such as that shown in Figure 5, three or more openings are used close together to comprise each station. By example, the three openings 66' constitute one fluid-passing station which provides multiple openings at each station so that if one opening should clog, the other two openings can carry the flow through the station.

It is understood that a larger number of closely spaced fluid-passing openings may constitute the first, second and third inlet stations 36, 46 and 56 and the discharge stations 66 as long as the total cross-sectional area of the openings associated with each station exceeds a minimum size so that there is a minimum amount of clogging across the station.

In the preferred embodiment, having 20 cm (8 inches) between the centers of like fluid-passing stations, the dimension of each fluid-passing opening is approximately 0,15 cm (0,060 inches) in width, a height substantially the same as the height of strips 30, 40, 50 and 60 or about 0,035 cm (0,014 inches) and a length of about 0,18 cm (0,070 inches) which is substantially the same as the width of the strips.

The length of the flow passage through each fluid-passing opening is substantially longer than the mean average between the width and height dimensions of the fluid passing opening. In effect, each fluid-passing opening is in itself a short pressure-drop channel. With reference to Figure 6, this pressure-drop phenomena may be explained as follows. Using flow channel 19 as exemplary, the flow from segment 19A of flow channel 19 comes directly toward the flow from segment 19B which is coming from the opposite direction, and they meet at the fluid-passing opening 56A. Each flow thus makes a 90° turn and flows straight for 0,18 cm (0,070 inches) through the length of fluid-passing opening 56A. The flows are then divided and each flow makes a 90° turn into flow-restricting segments 20A and 20B of flow channel 20. It is desirable to have the length of the fluid-passing opening (for example, 56A), which is also the thickness of wall 50, at least three times the thickness of the common wall 16 to get an increase in frinction and pressure loss as the flow makes two sharp 90° turns in going through the fluid-passing openings from one flow-restricting passage to another. The same relationship exists for the lengths of the remaining fluid-passing openings 36, 46 and 66 relative to the thickness of common wall 16. Of particular significance is the provision of this 3-to-1 minimum ratio with regard to inlet stations 36 and outlet stations 66.

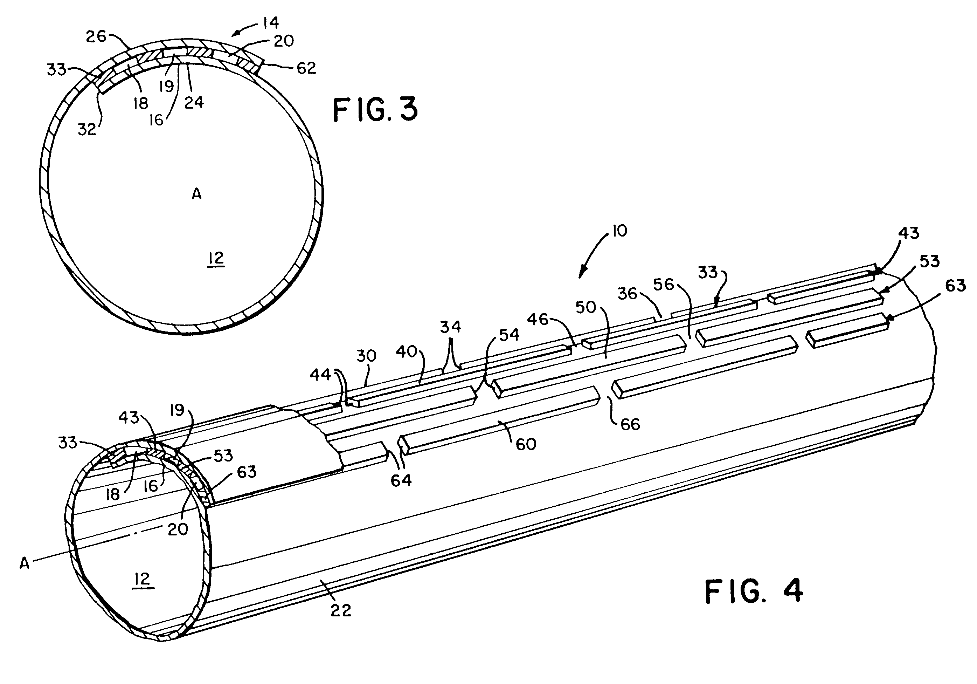

In the preferred embodiment of Figure 4, using a 152 µm (6 mil.) polyethylene film, all fluid passages 18-20 have a generally rectangular configuration with a height of approximately 0,035 cm (0,014 inch) and a width of about 0,18 cm (0,070 inch). The fluid-passing openings 36 are spaced approximately 20 cm (eight inches) apart. The second fluid-passing openings 46 are spaced 20 cm (eight inches) apart with each opening 46 being located intermediate between, but spaced from, a pair of openings 36. The third fluid-passing openings 56 are spaced 20 cm (eight inches) apart with each opening 46 being located intermediate between. Finally, the outer openings 66 are spaced 20 cm (eight inches) apart with each opening 66 being located intermediate between, but spaced from, a pair of openings 56.

In a preferred embodiment, as the main supply channel 12 of hose 10 is pressurized at 0,55 bar (8 psi) water flows through first inlet stations 36 located in wall member 33 which separates channel 12 and passage 18. The flow is then divided and moves within passage 18 to the nearest second inlet station 46 on either side of the first inlet station 36. Flow-restricting passage 18 has a length between inlet stations and a cross section of a size to reduce the pressure by approximately 0,07 bar (1,0 psi) within passage 18 between first fluid inlet stations 36 and second inlet stations 46.

Water then flows through the second fluid-passing openings or inlet stations 46 located in wall member 43 between passages 18 and 19 into passage 19 with an approximate 0,014 bar (0.2 psi) pressure loss. The flow is then divided and moves within passage 19 to the nearest third fluid-passing openings or inlet stations 56 on either side of each of the second fluid-passing openings 46. Flow-restricting passage 19 has a length between openings and an interior cross section of a size to reduce the pressure by approximately 0,1 bar (1.5 psi) within passage 19 between fluid-passing openings 46 and fluid-passing openings 56.

The water then flows through fluid-passing openings or inlet stations 56 located in wall member 53 between passages 19 and 20 with an approximate 0,035 bar (0.5 psi) pressure loss into passage 20. The flow is then divided and moves within passage 20 to the nearest discharge fluid-passing opening 66 on either side of fluid-passing opening 56. Flow-restricting passage 20 has a length between openings and an interior cross section of a size to reduce the pressure by approximately 0,32 bar (4.7 psi) within passage 20 between the third fluid-passing opening 56 and the discharge fluid-passing opening 66. The flow is then discharged to the exterior of the hose through discharge fluid passing openings or outlet stations 66 in wall member 63 with a slight pressure loss of about 0,007 bar (0.1 psi).

Because of the friction created as water passes through the small third fluid passage 20, the pressure adjacent to the discharge fluid-passing openings 66 is negligible (such as 0,007 bar (0.1 psi) or less), and the water actually drips out through the openings 66 under substantially quiescent conditions under almost no outward pressure.

The pressure drop loss between any inlet station and its nearest upstream outlet station depends on the width and height of the intermediate flow-restricting passage, the length of the same passage, and the rate of water passing through it.

In summary, and with reference to Figure 6, beginning with 0,55 bar (8 psi) in the rain supply channel 12, there are substantially six steps of pressure reduction as follows: 1. There is approximately 0,07 bar (1.0 psi) pressure loss within each segment, for example, segment 18C, of flow-restricting channel 18; 2. There is a slight (approximately 0,014 bar (0.2 psi)) pressure loss across the second fluid-passing openings, for example, opening 46B; 3. There is a pressure loss of approximately 0,1 bar (1.5 psi) within each segment, for example, segment 19B, of the second flow-restricting channel 19; 4. There is another slight (approximately 0,035 bar (0.5 psi)) pressure loss across the third fluid-passing openings, for example, opening 56A; 5. There is a substantial (approximately 0,32 bar (4.7 psi)) pressure loss within each segment, for example, segment 20A, of the third flow-restricting channel 20; 6. Lastly, there is a very slight (approximately 0,007 bar (0.1 psi)) pressure loss across the discharge fluid-passing openings, for example, opening 66B. Because the pressure loss across each discharge fluid-passing opening is on the order of 0,007 bar (0.1 psi), insect attacks to the discharge openings will have relatively little effect on the overall operation of the hose.

The flow characteristic for a hose of the preferred embodiment that has discharge outlets spaced at 20 cm (8 inches) and a total discharge rate of 7,4 ℓ/min per 100 m (0,5 g/min per 100 feet) can be described as approximately 0,015 ℓ/min (0,00333 g/min passing through each fluid passing opening 36, 46, 56, and 65 and approximately 0,0076 ℓ/min (0,001666 g/min) passing through each flow-restricting passage segment, such as those represented by 18A, 19A and 20A.

The hose functions well in the frequently found uneven field conditions where there are sharp variations in the soil elevation such as a mound. There is substantially no flow from one segment of the flow-restricting passage to another segment within the same flow-restricting passage. Referring to Figure 6, a portion of the water from inlet opening 36B flows into segment 18C where it continues to flow toward inlet opening 46B until it meets the flow of segment 18B which is coming from the opposite direction. The flows from segments 18B and 18C coming from opposite directions come together at inlet opening 46B where they both flow through opening 46B into the flow-restricting passage 19. Since the flows of each segment in all the fluid-restricting passages flow alternately in opposite directions, there is substantially no flow from one segment to another in any of the flow-restricting passages 18-20 even if the hose 10 is on a sharp incline as much as 45°. Water supplied to a particular outlet opening 66 comes from inlet openings 36A, 36B, 36C and 36D all of which are within 12 inches of the outlet opening 66. Since there is substantially no longitudinal flow between segments in the flow restricting passages, and the outlet openings are essentially opposite their inlet openings, the flow rate out of a particular outlet opening 66 is affected by the pressure in the main supply channel at a point closest to the outlet opening 66. The hose of the preferred embodiment, with 0,55 bar (8 psi) in the main supply channel, placed in a field over a mound of soil 50 cm (20 inches) high still has a relatively uniform distribution pattern with only about a 10% decrease in flow on top of the mound as compared to the surrounding soil level.

The flow rate of the preferred embodiment is generally linear with the pressure in the main supply channel, so that the flow from an outlet opening at any given point along the hose is increased or decreased at substantially the same rate that corresponds to a pressure increase or decrease at that same point within the main supply channel.

An important aspect of the present invention is a self-cleaning feature within the third flow-restricting passage 20. Most of the total pressure reduction takes place within the segments of the third flow-restricting passage 20. It has been observed that in the preferred embodiment more than 58% of the total pressure loss takes place within the segments (for example, segments 20A and 20B) of the third flow-restricting passage even though they have substantially the same length and cross-sectional dimensions as the first flow-restricting passage 18 in which approximately 12% of the total pressure loss takes place and also have substantially the same dimensions as the second flow-restricting passage 19 in which approximately 19% of the pressure loss takes place.

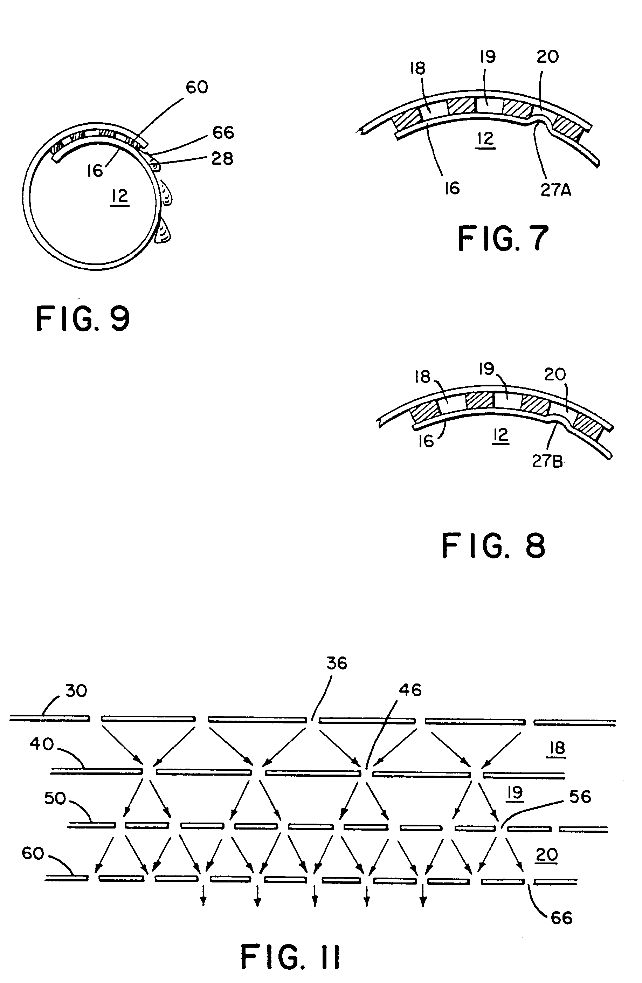

Figure 3 illustrates the cross-sectional view of the flow restricting passages 18, 19, and 20 in their normal configuration or as pressurized at a low pressure. Figure 7 is a cross-sectional view of the flow-restricting passages 18-20 at a point next to a fluid-passing opening 56. Figure 8 is a cross-sectional view of the flow-restricting passages 18-20 at a point next to the discharge fluid-passing openings 66. In Figure 3, the common wall 16 is in its normal relaxed state, such as when there is no pressure or a low pressure 0,069 bar (1 psi)) in the main supply channel 12. The flow-restricting passage 20 is open and relatively free flowing so that any minute impurities in the water will flush on through. However, when the working pressure of 0,55 bar (8 psi) is applied to the main channel there is approximately a 0,22 bar (3.2 psi) pressure differential across the common wall 16 at point 27A as shown in Figure 7 causing the flow-restricting passage 20 to be smaller due to outward deflection of the common wall 16 at point 27A. At the same time, Figure 8 shows a greater outward deflection of common wall 16 at point 27B due to the approximately 0,54 bar (7.9 psi) pressure differential across the common wall 16. The cross-sectional view of Figure 7 is at the inlet fluid passing opening 56A (Figure 6) of the flow-restricting passage segment 20A, and Figure 8 is at the discharge fluid-passing opening 66B of the flow-restricting passage segment 20B. The amount of deflections of the common wall 16 into the flow-restricting passage segment 20B gradually increases from the indentation at 27A in Figure 7 to a substantial indentation at 27B in Figure 8. When under working pressure, the cross-sectional area of the flow-restricting passage segment 20B is substantially smaller than segments 18A and 19A. This smaller cross-sectional dimension provides the necessary pressure loss within segment 20B to give the desired flow. Yet segment 20B returns to its normal cross-sectional dimensions (Figure 3) when the pressure is reduced at the end of the watering cycle. The segment 20B is self-flushing when it is in its normal configuration at a low pressure at both the beginning and end of the watering cycles. Any minute particles that may have accumulated during the watering cycle, due to the reduced size of segment 20B, are flushed at this time.

As shown in Figure 4, the main supply channel 12, formed by wall member 22, becomes circular when pressurized, forming a round tube essentially free of internal partitions or other obstructions that would provide additional surfaces in the flow channel causing more loss of pressure due to friction, as well as making the hose more difficult to collapse for storage and shipment.

As the hose is installed in the field, it is preferable to orient the hose so that the flow-restricting passages are on top. Foreign particles in the water normally settle to the bottom of the main supply channel and are less apt to enter the fluid-passing openings and flow passages when they are on top of the hose.

Three elements are combined to cause the flow from the discharge fluid passing openings 66 to tend to fall directly below each opening 66 as shown in Figure 9. First, the discharge fluid passing openings 66 are located in an upper quadrant of the hose rather than in the middle and on top of the hose. Second, the flow from the discharge openings 66 tends to come out approximately normal to the last set of strips 60 and pointed in a slightly downward angle when the hose is pressurized and in its normal upright position. Third, the common wall 16 forms one portion of the perimeter of each discharge fluid passing opening 66 so that the flow is in direct contact with the outer wall 28 as it passes through the discharge fluid passing openings and tends to cling to the surface of the outer wall 28 until it drops on the soil directly below each discharge fluid passing opening 66.

Referring to Figure 6, each fluid discharge opening, for example, 66B, is supplied with the total flow from two segments 20B and 20C of the third flow restricting passage 20; by one-half the flow from each of four segments 19A, 19B, 19C, 19D of the second flow-restricting passage 19 and by one-third of the flows from each of six segments 18A, 18B, 18C, 18D, 18E, 18F of the first flow-restricting passage 18. Thus, it can be seen that, if, for example, segments 18C, 19B, and 20B should become clogged due to a very poor water quality, the remaining segments would still supply the discharge fluid passing opening 66B, so that a flow would be maintained to the plants even though the flow would be less than the adjoining outlets.

Thus, it can be seen that the total accumulated length of segments 18C, 19C, and 20C of the flow-restricting passages should be of substantially greater length than the distance between two adjacent discharge fluid-passing openings 66 and, at the same time, the flow-restricting channels should be continuous so that each discharge fluid-passing opening is supplied by more than one flow-restricting channel segment and more than one inlet fluid-passing opening. By using a long total length of flow-restricting channels, it is possible at the same time to use a larger cross section in the flow-restricting channels and still maintain the same flow rate. The larger cross sections in the flow-restricting channels provide a flow path that is less apt to clog from impurities in the water.

In a similar manner, the flow for each discharge fluid-passing opening, for example, 66B, is supplied by 50% of the flow from each of the third inlet fluid passages 56A and 56B; by 25% of the flow through each of the second inlet fluid-passing openings 46A and 46C and 50% of second inlet fluid-passing opening 46B; and by 25% of the flow through each of four inlet fluid passing openings 36A, 36B, 36C and 36D (not shown). Again, it can be seen that if, for example, fluid-passing openings 36A, 46A or 56A should become clogged, the remaining inlet fluid-passing openings 36B, 36C, 36D, second fluid-passing openings 46B, 46C and third fluid-passing opening 56B would supply the discharge fluid passing opening 66.

While an 0,55 bar (8 psi) inlet water pressure is used to illustrate operation of a preferred embodiment, embodiments incorporating the teachings of the present invention will operate at inlet water pressures ranging from about 0,14 bar (2 psi) to 3,5 bar or more (50 or more psi), depending on the strength of wall 22, fluid-passing opening sizes, ratios, etc.

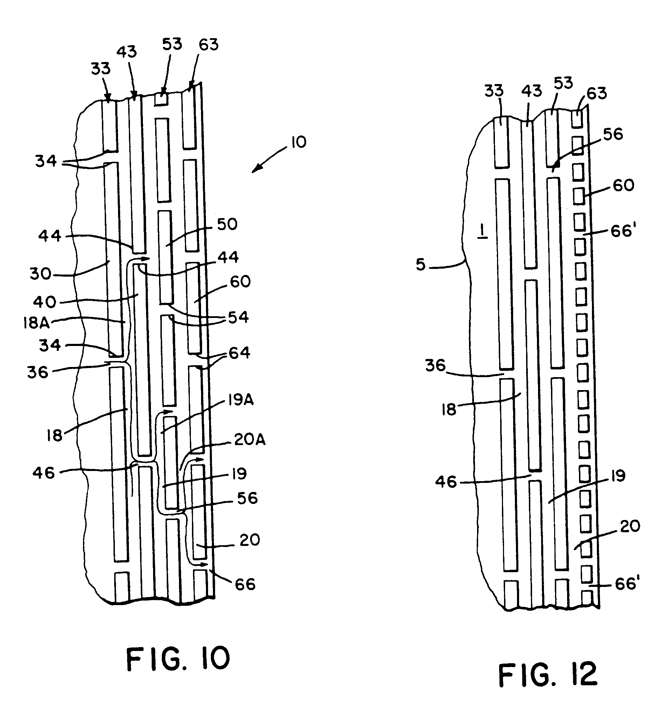

Figure 10 shows yet another embodiment for a hose embodying the teachings of the subject invention. In this arrangement, the distances between adjacent inlet stations defined in both strips 50 and 60 have been reduced so that the distance between adjacent inlet stations 56 is 10 cm (four inches) and the distance between adjacent outlet stations 66 is likewise 10 cm (four inches). The distances between adjacent inlet stations 36 and 46 remain unchanged at 20 cm (eight inches).

The flow path of this type of configuration may be explained with reference to Figures 10 and 11, where it can be seen that there are twice as many openings 56 and 66 as there are openings 46 and 36. If we assume the flow rate for a given hose with outlets spaced 10 cm (4 inches) apart is 8,9 ℓ/min per 100 m (0,6 g/min per 100 foot) length, the theoretical flow through each opening 56 and 66 is 0,009 ℓ/min (0,002 g/min), and the flow through each opening 36 and 46 is 0,018 ℓ/min (0,004 g/min). The flow through segment 20A is 0,004 ℓ/min (0,001 g/min), while the flow through segments 18A and 19A is 0,009 ℓ/min (0,002 g/min). The length of segments 20A and 19A is 5 cm (2 inches), while the length of segment 18A is 10 cm (4 inches). If the configurations were used as shown in Figure 6 but with a 4-inch outlet spacing, all of segments 18C, 19B and 20A would be 5 cm (2 inches), with the total combined length of the flow passage segments through which the water has to travel between the inlet openings 36 and the discharge openings 66 being 15 cm (6 inches). However, with the embodiment illustrated in Figures 10 and 11, the total length of the flow passage segments 18A, 19A and 20A through which the water has to travel between the inlet openings 36 and the outlet openings 66 is 20 cm (8 inches). This longer total combined length flow passage produces a greater pressure loss due to friction. In addition, the flow rates in flow-restricting segments 18A and 19A of Figure 10 are twice the flow rate that they would have been in the configuration shown in Figure 6. These higher flow rates in flow-restricting segments 18A and 19A of Figure 10 produce a still greater pressure loss. This additional pressure loss reduces the flow rate through the discharge openings 66 so that it is possible to have closer outlet spacing, such as 10 cm (4 inches), without greatly increasing the total flow rate from the hose.

Another example of reducing flow rate for a given outlet spacing would be using a 60 cm (24-inch) spacing for inlet openings 36 and 46 and a 30 cm (12 inch) spacing for inlet openings 56 and outlet openings 66.

Figure 12 shows yet another embodiment where like reference numerals denote like elements, and only the differences will be described. The arrangement of Figure 12 is similar to that of the first preferred embodiment with the exception that the strip 60 is arranged to include a plurality of closely spaced outlet stations 66' such as 0,64 cm (1/4 inch) to 2,54 cm (1 inch) apart. This type of arrangement can be advantageously used to irrigate plants growing in a media of extremely porous nature.

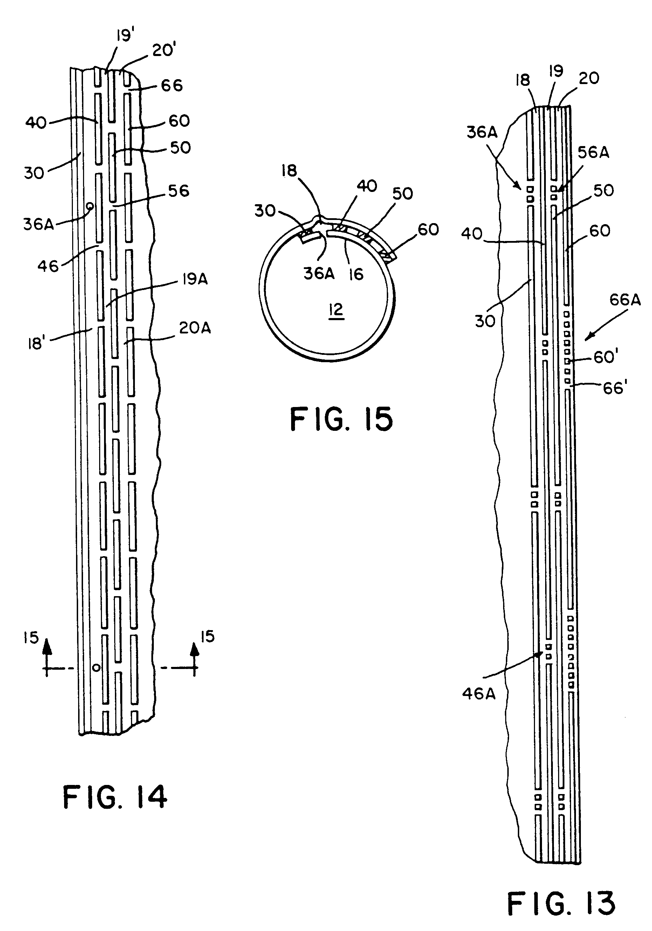

As can be appreciated from the foregoing discussion, there are any number of arrangements of inlet and outlet station patterns, as well as dimensional arrangements for flow-restricting passages, according to the requirements for the area to be irrigated. For example Figure 13 shows an arrangement where the inlet stations are each defined by three closely spaced openings 36A, and each outlet station is defined by numerous closely spaced openings 66A. Further, each of the outlet stations is spaced apart at predetermined distances.

It is often desirable to irrigate flower pots at several intervals across the top of the pot so that the entire root area is watered uniformly. The embodiment of Figure 13 provides an ideal way to irrigate a row of 15 cm (6-inch) flower pots spaced on 30 cm (12-inch) centers. The hose is stretched lengthwise over the top of pots so that there are several outlets to drip on each pot. A hose for such an application has inlet stations 36A, 46A, and 56A spaced at 30 cm (12-inch) intervals and outlet stations 66 spaced at 30 cm (12-inch) centers each consisting of 10 or 12 outlet openings spaced about 0,64 cm (1/4 inch) apart. This provides a row of drops about 6,4 to 7,6 cm (2-1/2 to 3 inches) in length in the center of each pot.

A similar application for this embodiment is a row of trees spaced 6 m (20 feet) apart. A hose is run lengthwise of the row and next to the trees and centered on each tree are 12 outlet openings 66 spaced 30 cm (12 inches) apart with no openings between so that the irrigation is concentrated only on the area of the tree roots.

Figures 14 and 15 show yet another embodiment for a hose produced according to the teachings of the subject invention. This embodiment combines the hydraulic principle of pressure loss due to water flowing through an orifice and pressure loss due to water flowing through a flow restricting channel, wherein the flow rate through the orifice changes at approximately a ratio of the square root of the change in pressure while the flow rate through the flow-restricting channel changes approximately linearly with the pressure change. This combination gives a flow rate from the outlets 66 that changes in response to pressure change at a rate somewhere between linear and the square root of pressure change depending on the structural dimensions of the inlet openings and the length and cross-sectional area of the flow-restricting channels. This embodiment is similar to that shown in Figure 4 with the exception that bead 30 is of unitary construction with no indentations being provided. Instead, inlet orifices 36A are provided within the film to create the fluid communication path between the main supply channel 12 and the flow-distributing channel 18'. In addition, the flow-distributing channel 18' has a cross-sectional area which is large enough to allow the flow from each inlet orifice 36A to move through the flow-distributing channel 18' to the fluid-passing orifices 36A in the immediate vicinity without substantial pressure loss. At the same time, the flow-distributing channel 18' has a cross-sectional area small enough so that a major portion of the flow from each inlet orifice 36A will tend to flow out of the fluid-passing openings 46 in the immediate vicinity of the inlet orifice 36A. This vicinity will normally consist of a length half way to adjacent inlet orifices 36A. In a typical embodiment, the inlet openings 36A are approximately 0,06 cm (0,024 inches) in diameter and spaced about 12,2 cm (48 inches) apart. The flow-restricting passages 19' and 20' are approximately 0,035 cm (0,014 inch) high and 0,18 cm (0,070 inch) wide, and the first, second and third fluid-passing openings 46, 56 and 66 are on 20 cm (8-inch) centers. With an 0,55 bar (8 psi) pressure in the main supply channel 12, a typical pressure loss across the inlet openings would be approximately 0,2 bar (3 psi), and a pressure loss within the first flow-restricting passage 19' would be approximately 0,24 bar (3,5 psi) with approximately a 0,1 bar (1,5 psi) pressure loss within the flow-restricting passage 20'.

Since the flow rate from the outlets changes substantially less than the pressure changes within the main supply channel, it is possible to use longer rows with the same uniformity than would be possible when using a hose where the outlet flow is linear with pressure.

The hydraulic flow characteristic for the embodiment of Figures 14 and 15 could be described as a hose with 8 psi in the main supply channel with inlet orifices 36A spaced 122 cm (48 inches) apart and of such a size that each will pass 0,09 ℓ/min (0,02 g/min) at a pressure loss of 0,2 bar (3 psi), whereupon this 0,09 ℓ/min (0,02 g/min) flow is divided for passage through 6 first fluid-passing openings 46, spaced on 20 cm (8-inch) centers, and then is further divided for passage into 12 flow-restricting passage segments 19A, each approximately 10 cm (4 inches) in length and of a cross-sectional size so that each segment will carry 0,007 ℓ/min (0,0016 g/min) at a pressure loss of 0,1 bar (1.5 psi).

Whereupon there is approximately 0,035 bar (0.5 psi) pressure loss as the flow passes through the fluid-passing openings 56 into 12 second fluid-restricting passage segments 20A, each approximately 10 cm (4 inches) in length and of a cross-sectional size so that each segment will carry 0,007 ℓ/min (0,001666 g/min) at a pressure loss of approximately 0,2 bar (2.9 psi) so that the pressure within the flow-restricting passages 20 adjacent to the outlet openings 66 is approximately 0,007 bar (0,1 psi) whereupon the flow passes through the 8 spaced outlet openings 66 in the form of a slow drip. The total flow from the 150 outlets (or 30 m (100 feet) of hose) would be 2,27 ℓ/min (0,5 g/min) with a total pressure reduction of 0,545 bar (7.9 psi) between main supply channel 12 and a point which is adjacent to the outlet openings and in the flow-restricting passage 20.

This embodiment is configured so the flow rate out of the outlet openings 66 can be designed to suit the crop by changing the spacing and diameter of the inlet orifices 36A and/or the cross-sectional dimensions and length of the flow-restricting passages 19' and 20'. Also, the hose can be made to function so that a major percent of the pressure drop takes place either across the inlet orifice or within the flow-restricting passages.

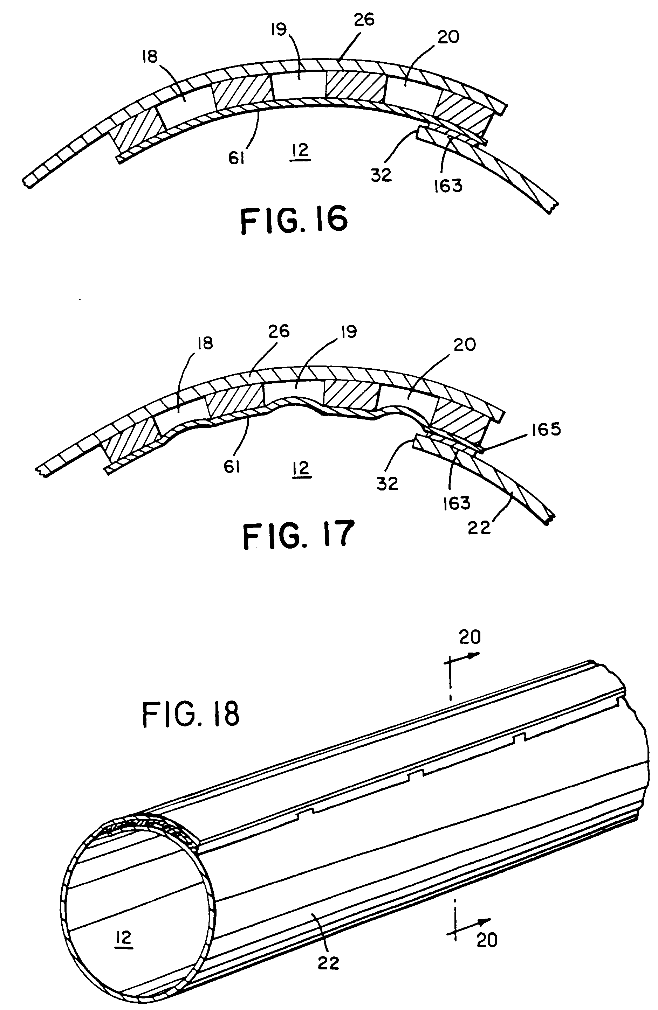

Figures 16 and 17 illustrate yet another embodiment of the hose 10. As shown in Figures 16 and 17, the flow-restricting channels 18, 19 and 20 are defined in part by an elongated flat film 61 which is of reduced thickness. This film replaces the margin area 24 in the embodiment of Figure 3. For this reason, the edge 32 of sheet 22 is secured to the margin 165 of the sheet 61 by a conventional hot melt bead 163. The reduced thickness of the common wall 61 allows each of the flow-restricting passageways 18, 19 and 20 to be reduced in size and thereby create a greater friction when the main channel 12 experiences an increase in water pressure. The reduction in cross-sectional area under the increase in water pressure is illustrated in Figure 17.

This embodiment gives a uniform flow from a longer length of row. At the inlet end of the hose, the higher pressure (0,83 bar = 12 psi, for example) within the main channel 12 causes the thinner portion of common wall 61 to stretch and deflect outwardly as in Figure 17 and into the flow-restricting passages 18, 19 and 20, while at the same time the exterior common wall 26 portion of the flow restricting passages holds its normal dimensions because it is a heavier wall that does not stretch substantially. An alternative to using a thinner wall for the sheet 61 is to use a material of the sane thickness but with a greater ability to stretch under pressure than the material used for common exterior wall 26.

This reduces the size of the flow-restricting passageways and consequently reduces the flow through said passageways. As the flow travels through the main channel 12 in very long lengths of hose, the pressure within is gradually reduced due to friction so that the closed off end of the main channel 12 has substantially less pressure (0,415 bar = 6 psi, for example) than the inlet end. The thin common wall 61 at the closed off end of the hose has less pressure against it and maintains its normal circular configuration (Figure 16) allowing the flow-restricting passageways to hold their normal cross-sectional area and flow. Therefore, the flow at the inlet end and the closed off end can be substantially the same even though there is about a 50% loss in pressure due to friction within the main channel 12. It is understood that the thin section 61 may be a thinner portion of sheet 22 rather than a separate sheet. The net effect is that the size of the flow-restricting passages are pressure compensating to give a relatively uniform flow throughout the length of the hose. Hoses which have the pressure compensating flow-restricting passages are suited to fields in which the rows run up or downhill, since the flows from the outlets remain relatively even though the pressures within main flow channel alter with changes in elevation.

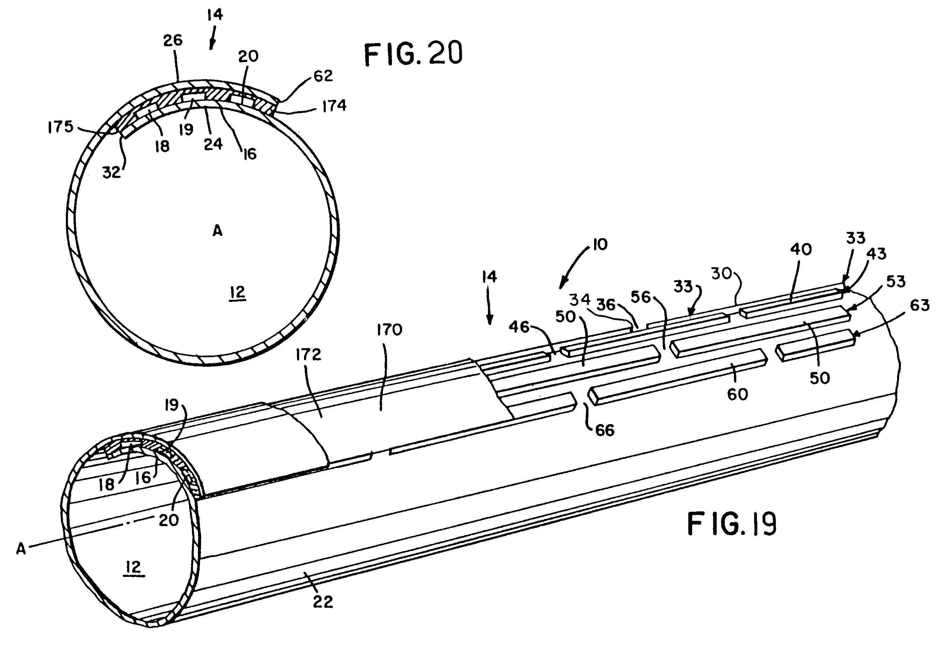

Figures 18-21 show another embodiment of a hose embodying the teachings of the present invention. Because the hose is similar to that shown in Figures 1-4, like numbers are used to show like elements, and only the differences will be described.

In use, the main supply channel 12 is connected to a source of pressurized water in much the same way as the first embodiment with reference being made to Figure 1. Interposed between the overlapping margins 24 and 26 is an elongated flat sheet 170 with elongated longitudinally extending ridges or strips of varying lengths arranged in a particular manner, yet to be described, to define the fine water-distributing network 14. The flat sheet with ridges is also made from a water-impervious plastic material.

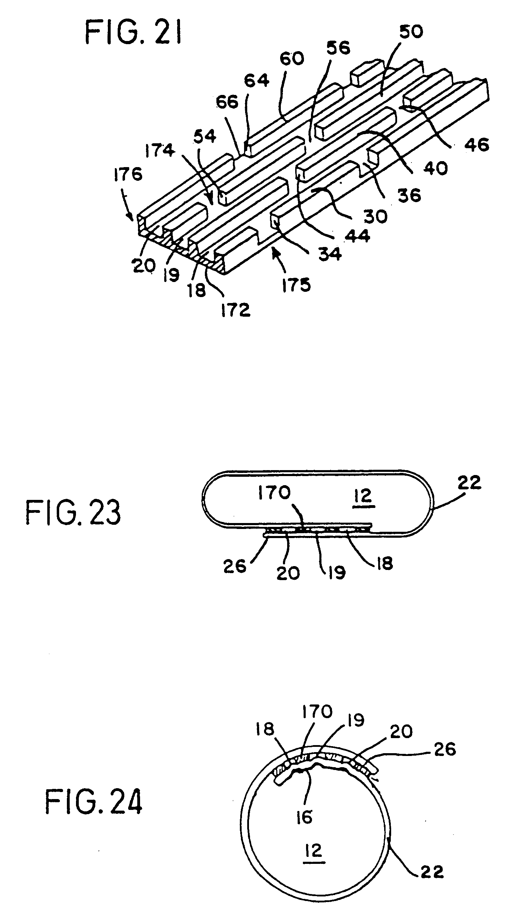

With reference to Figures 18-21, and as oriented in Figure 21, the elongated sheet 170 includes a planar bottom surface 172 and a planar upper surface 174. The sheet also defines right and left longitudinal edges 175 and 176, respectively. Defined on the upper surface 174 are the series of ridges 30, 40, 50, 60 which, together with the upper surface, define three sides of each flow-restricting channel 18, 19 and 20. As shown in Figure 19, the bottom surface 172 of the sheet 170 is in intimate contact with and secured to the margin 26 of sheet 22. At the same time, each of the ridges is in intimate contact with and secured to the margin 24, thus completing the flow-restricting channel structure.

Again with reference to Figures 18-21, the particulars of the fine water-distributing network 14 and the arrangement of ridges in a preferred embodiment will now be described. With the exception of the structure associated with the flat sheet 170 with ridges, the hose of Figures 18-21 is the same as the hose of Figures 1-4. In this regard, the strips 30 define the edge 175 of the sheet 170. The second set of strips 40, which like all of the strips are an integral part of the sheet 170, also have their ends 44 spaced from each other to define a further set of fluid-passing openings or inlet stations 46, to form a means of fluid communication between the first passage 18 and the second flow-restricting passage 19. Finally, the strips 60 define the edge 174 of the sheet 170.

For the purposes of simplifying the presentation, the fluid-passing stations 36, 46, 56 and 66 in Figures 18-21 are shown in the context of a less preferred embodiment as a single opening. However, in a more preferred embodiment, such as that shown in Figure 22, three or more openings are used close together to comprise each inlet and outlet station. By example, the three openings 66' constitute one fluid-passing station which minimizes the chance of clogging as the flow passes through the station. This provides multiple openings at each station so that, if one opening should clog, the other two openings can carry the flow through the station.

In the preferred embodiment having 20 cm (8 inches) between the centers of like fluid-passing stations, the dimension of each fluid-passing opening is approximately 0,15 cm (0,060 inches) in width, a height substantially the same as the height of strips 30, 40, 50 and 60 or about 0,035 cm (0,014 inches) and a length of about 0,18 cm (0,070 inches) which is substantially the same as the width of the strips.

In the preferred embodiment of Figure 19, using a 152 µm (6 mil.) polyethelene film, all fluid passages 18-20 have a generally rectangular configuration with a height of approximately 0,035 cm (0,014 inch) and a width of about 0,18 cm (0,070 inch).

As shown in Figures 18-21, the flow-restricting channels 18, 19 and 20 are defined in part by an elongated flat sheet 170 which, together with margin 26, is of greater thickness than the common wall 61. The lower thickness of the common wall 61 allows each of the flow-restricting passageways 18, 19 and 20 to be reduced in size and thereby create a greater friction when the main channel 12 experiences an increase in water pressure. The reduction in cross-sectional area under the increase in water pressure is illustrated in Figure 24.

This embodiment gives a uniform flow from a longer length of row. At the inlet end of the hose, the higher pressure (0,83 bar = 12 psi, for example) within the main channel 12 causes the thinner portion of common wall 16 to stretch and deflect outwardly as in Figure 24 and into the flow-restricting passages 18, 19 and 20, while at the same time the exterior common wall 26 along with the portion of sheet 170 that defines the flow restricting passages holds their normal dimensions because they, together, provide a heavier wall that does not stretch substantially.

This reduces the size of the flow-restricting passageways and consequently reduces the flow through the passageways. As the flow travels through the main channel 12 in very long lengths of hose, the pressure within is gradually reduced due to friction so that the closed off end of the main channel 12 has substantially less pressure (0,415 bar = 6 psi, for example) than the inlet end. The thin common wall 61 at the closed off end of the hose has less pressure against it and maintains its normal circular configuration (Figure 20) allowing the flow restricting passageways to hold their normal cross-sectional area and flow. Therefore, the flow at the inlet end and the closed off end can be substantially the same even though there is about a 50% loss in pressure due to friction within the main channel 12. The net effect is that the size of the flow-restricting passages are pressure compensating to give a relatively uniform flow throughout the length of the hose. Hoses which have the pressure compensating flow-restricting passages are suited to fields in which the rows run up or downhill, since the flows from the outlets remain relatively even though the pressures within the main flow channel change due to changes in elevation.

In this way, the flow rate of the preferred embodiment is pressure compensated so that the flow from an outlet opening at any given point along the hose remains relatively constant despite any pressure increcase or decrease within the main supply channel.

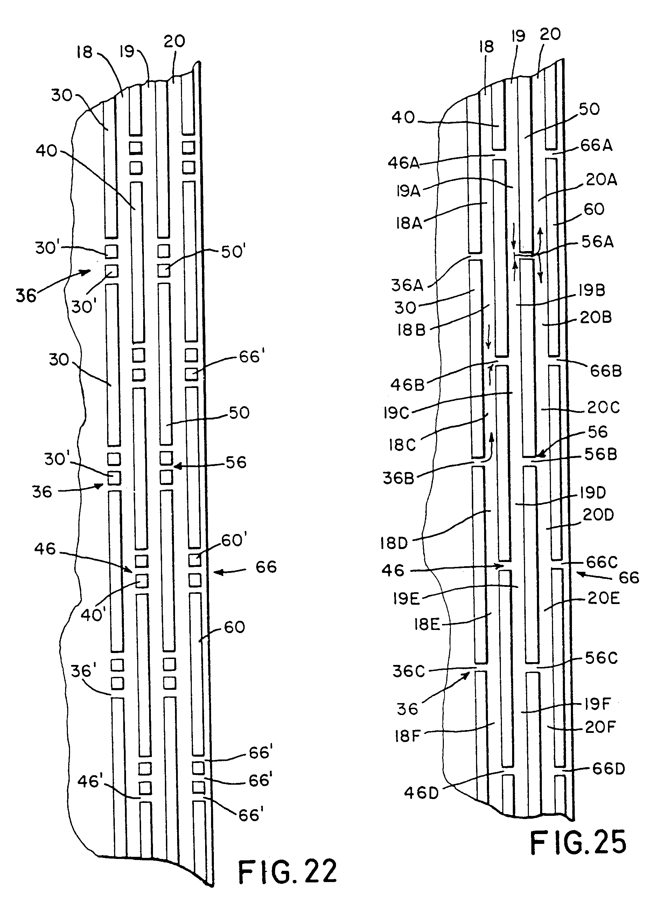

Referring to Figure 25, the way in which fluid passes through the water distributing network will now be described. Each fluid-discharge opening, for example, 66B, is supplied with the total flow from two segments 20B and 20C of the third flow restricting passage 120; by one-half the flow from each of four segments 19A, 19B, 19C, 19D of the second flow-restricting passage 119 and by one-third of the flows from each of six segments 18A, 18B, 18C, 18D, 18E, 18F of the first flow-restricting passage 18. Thus, it can be seen that if, for example, segments 18C, 19B, and 20B should become clogged due to a very poor water quality, the remaining segments would still supply the discharge fluid-passing opening 66B, so that a flow would be maintained to the plants even though the flow would be less than the adjoining outlets.

Thus, it can be seen that the total accumulated length of segments 18C, 19C, and 20C of the flow-restricting passages should be of substantially greater length than the distance between two adjacent discharge fluid-passing openings 66 and, at the same time, the flow-restricting channels should be continuous so that each discharge fluid-passing opening is supplied by more than one flow-restricting channel segment and more than one inlet fluid-passing opening. By using a long total length of flow-restricting channels, it is possible at the same time to use a larger cross section in the flow-restricting channels and still maintain the same flow rate. The larger cross sections in the flow restricting channels provide a flow path that is less apt to clog from impurities in the water.

In a similar manner, the flow for each discharge fluid-passing opening 66 is supplied by 50% of the flow from each of the third inlet fluid passages 56A and 56B; by 25% of the flow through each of the second inlet fluid-passing openings 46A and 46C and 50% of second inlet fluid passing opening 46B; and by 25% of the flow through each of four inlet fluid-passing openings 36A, 36B, 36C and 36D. Again, it can be seen that if, for example, fluid-passing openings 36A, 46A or 56A should become clogged, the remaining inlet fluid-passing openings 36B, 36C, 36D, second fluid-passing openings 46B, 46C and third fluid-passing opening 56B would supply the discharge fluid-passing opening 66.

While descriptions herein have generally referred to water and fluid passages, it is understood the same hose can be used for chemical solutions such as insecticides, fungicides, fertilizers and also compressed air for soil aeration.

Since there is a wide variety of conditions encountered in the field, it is understood that the preferred embodiments are just a few of the many combinations of ratios and sizes of first fluid-passing openings, spacing of second fluid-passing openings, spacing of discharge fluid-passing openings, cross section of the fourth fluid passages, and pressures introduced into the main supply channel, which fall within the scope and function of this invention.

The foregoing is considered as illustrative only of the principles of the invention. Further, since numerous modifications and changes will readily occur to those skilled in the art, it is not desired to limit the invention to the exact construction and operation shown and described, and accordingly all suitable modifications and equivalents may be resorted to, falling within the scope of the invention as claimed.

## Claims

1. An elongated fluid-distributing hose for use in a fluid-distributing system, said hose comprising: an elongated, water-impervious planar material (22) having longitudinally extending margins, said material being folded upon itself to overlap said margins thus defining inner and outer margins (24,26); at least two longitudinally extending strip means (30, 40, 50, 60) disposed between and secured to said overlapping margins (24, 26) and each extending longitudinally over the full length of said hose, and positioned near to, but spaced from, the other, the longitudinal axis of each of said strip means being substantially parallel to and substantially equidistant from the longitudinal axis (A) of said hose; a discrete main supply channel (12) adapted for fluid communication with a source of fluid under pressure, a first (30) of said strip means and said material (22) defining said discrete main supply channel; at least one discrete elongated flow passage (18, 19, 20) providing a flow-restricting passage which is continuous and uninterrupted throughout the full longitudinal length of said hose, said flow passage being disposed about the exterior of said main supply channel and being defined between said overlapping margins (24, 26) of the hose and said strip means (30, 40, 50, 60); a common wall (16) made of said planar material, said wall being shared by said main supply channel (12) and said discrete flow passage (18, 19, 20); a series of longitudinally spaced inlet means (36) for providing fluid communication between said discrete main supply channel (12) and said discrete elongated flow passage (18); and a series of longitudinally spaced outlet means (66) for passing fluid from said flow passage to the exterior of said hose, characterized in that it comprises at least three strip means (30, 40, 50, 60) each extending longitudinally over the full length of said hose and defining at least two discrete elongated flow passages (18, 19, 20) aligned in a common plane which are continuous and uninterrupted throughout the full longitudinal length of said hose and substantially parallel to and equidistant from the longitudinal axis of the hose and at least one of which is a flow-restricting passage, and said strip means including a first strip (30), at least one further strip (50, 60) and a first set of longitudinally extending discrete strips (40) disposed end-to-end, the ends of said discrete strips (40) being spaced from each other to define over the full length of said hose a series of longitudinally spaced fluid-passing stations (46, 56) between the one (18) of said at least two flow passages formed in part by said first strip (30) and said first set of strips (40) and the at least one other (19, 20) of said at least two flow passages formed in part by said first set of strips (40) and said at least one further strip (50,60), the said inlet means (36) providing fluid communication between said discrete main supply channel (12) and the said one flow passage (18) and the said outlet means (66) providing fluid communication between the said at least one other flow passage (19,20) and the exterior of said hose.

2. The hose of claim 1, wherein said outlet means comprises a plurality of discharge outlet stations (66) disposed one next to the other along the full length of the hose.

3. The hose of claim 2, wherein each of said outlet stations (66) receives fluid from two opposite directions within said passage (20).

4. The hose of claim 1, wherein said inlet means comprises a plurality of first fluid-passing inlet stations (36) and said outlet means comprises a plurality of discharge fluid-passing outlet stations (66).

5. The hose of claim 4, wherein at least three adjacently arranged first inlet stations (36) contribute supply fluid to one of said outlet stations (66).

6. The hose of claim 4, wherein each of said first inlet stations (36) is in fluid communication with a least three of said outlet stations.

7. The hose of claim 4, wherein said at least one further strip is a further wall member (63) separating the other of said passages from the exterior of said hose, and wherein said discharge outlet stations (66) are defined in said further wall member.

8. The hose of claim 4, wherein said flow-restricting passage ( 19,20) is divided into a plurality of adjacent flow-restricting segments (19A, 19B, 20A, 20B) each of said segments being defined by the length of said passage between the station in one of the two strip means defining said passage and the nearest station in the other of the two strip means.

9. The hose of claim 8, wherein each two adjacent segments (19A, 19B, 20A, 20B) share a common station (56A, 66A) for receiving the flow of fluid through said two adjacent segments.

10. The hose of any one of claims 1 to 9, wherein one of said flow-restricting passages (18, 19,20) includes means (170) for altering the cross-section in said passage in response to a pressure differential between said main supply channel and said passage.

11. The hose of claim 1, wherein said at least two passages comprise first, second and third elongated flow-restricting passages (18,19,20) substantially parallel to and equidistant from the longitudinal axis of the hose and disposed about the exterior of the main supply channel (12) and wherein said common wall (16) comprises a first wall member (33) separating said main supply channel (12) and said first passage, said hose further comprising a second wall member (43) defined by said first set of strips (40) separating said first and second passage (18,19), a third wall member (53) separating said second and third passages (19,20),
said inlet means (36) comprising first fluid-passing stations in said first wall member (33) for fluid communication between said main supply channel passage (12) and said first passage (18),
said fluid-passing stations comprising second fluid-passing stations (46) in said second wall member (43) for fluid communication between said first passage (18) and said second passage (19),
said outlet means comprising third fluid-passing stations (56) in said third wall member (53) for fluid communication between said second passage (19) and said third passage (20) and discharge fluid-passing outlet stations (66) from said third passage (20) to the exterior of the hose.

12. The hose of claim 11, wherein the flow from each inlet station (36) supplies a portion of the total flow that passes through each of at least three outlet stations (66).

13. The hose of claim 11, wherein at least two of said first, second and third wall members (33,43,53) comprise a plurality of elongated strips (30,40,50) placed lengthwise one next to the other throughout the length of the hose, the ends of said strips being spaced from each other to define said fluid-passing stations.

14. The hose of claim 11, further comprising a fourth wall member (63) separating said third passage (28) from the exterior of said hose, and wherein said discharge outlet stations (66) are defined in said fourth wall member (63).

15. The hose of claim 11, wherein each of said flow-restricting passages (18,19,20) is divided into a plurality of adjacent flow-restricting segments (18A, 18B, etc.), each of said segments being defined by the length of said passage between the stations in one of the two wall members associated with the passage and the nearest station in the other of the two wall members.

16. The hose of claim 1, further comprising means (70,170) defined in said flow-restricting passage and spaced from said common wall (16) for compensating for pressure loss within said passage.

17. The hose of claim 4, wherein the flow length between one of said first inlet stations and one of said outlet stations is greater than the distance between adjacent outlet stations.

18. The hose of claim 4, wherein the ratio of the number of outlet stations to the number of inlet stations is greater than 2:1.

19. The hose of any one of the preceding claims, wherein a major portion of the pressure drop between said main supply channel and said outlet stations takes place within said at least one flow-restricting passage.

20. The hose of anyone of claims 1 to 18, wherein a major portion of the pressure drop between said main supply channel and said outlet stations takes place across said inlet stations.

21. The hose of claim 1, wherein the inner and outer margins of the planar material defining the flow-restricting passages have no fluid-passing openings.

22. The hose of claim 4, wherein each inlet and outlet station (36,66) comprises a plurality of closely spaced inlet and outlet openings (36,66) sufficient in number and size so that there is a minimum amount of clogging across the station.

23. The hose of claim 4, wherein all water flow through each fluid-passing station and all water flow through said flow-restricting passage occurs in a plane substantially equidistant from the longitudinal axis of said hose.

24. The hose of claim 14, wherein said fourth wall member (63) is defined by a plurality of elongated strips (60) disposed lengthwise end-to-end throughout the length of the hose, the longitudinal axis of each strip of said plurality being substantially parallel to and substantially equidistant from the longitudinal axis of said hose, the ends of said strips being spaced from each other to define said discharge outlet stations (66).

25. The hose of claim 4, wherein the length of flow travel from a first fluid-passing station to its nearest discharge fluid-passing station is at least twice the distance between adjacent discharge stations.

26. The hose of claim 4, wherein the flow rate from each discharge station is regulated by the ratio of the number of discharge stations to the number of first fluid-passing stations along with the cross-sectional area of the flow-restricting passage and the total length of flow travel within said flow-restricting passages.

27. The hose of claim 1, wherein said first strip (30) comprises a unitary strip and said inlet means (36A) is in said overlapping margin (24) of said planar material (22).

28. The hose of claim 1, wherein said inlet means (36) is in said first strip (30).

## Patentansprüche

1. Langgestreckter Flüssigkeitsverteiler-Schlauch zur Verwendung in einem Flüssigkeitsverteiler-System, bestehend aus: einem langgestreckten, wasserundurchlässigen, glatten Material (22) mit sich in Längsrichtung erstreckenden Randstreifen, welches Material auf sich selbst hin gefaltet ist, sodaß die besagten Randstreifen einander Überlappen und innere bzw. äußere Randstreifen (24, 26) definieren; aus zumindest zwei sich in Längsrichtung erstreckenden Streifen (30, 40, 50, 60), die zwischen den überlappenden Randstreifen (24, 26) angeordnet und mit diesen verbunden sind, die sich über die gesamte Länge des Schlauches erstrecken und nahe beieinander jedoch voneinander beabstandet vorgesehen sind, wobei die Längsachse jedes der Streifen im wesentlichen parallel zu und im wesentlichen gleich weit von der Längsachse (A) des Schlauches entfernt ist; einem Haupt-Versorgungskanal (12), der zur flüssigkeitsführenden Verbindung mit einer Quelle von unter Druck stehender Flüssigkeit ausgelegt ist, wobei ein erster (30) der besagten Streifen und das Material (22) den besagten Hauptversorgungskanal definieren; zumindest einem langgestreckten Durchflußkanal (18, 19, 20) der einen kontinuierlich und ununterbrochen über die gesamte Länge des Schlauches verlaufenden strömungsbegrenzenden Kanal darstellt, wobei dieser Durchflußkanal an der Außenseite des Haupt-Versorgungskanals angeordnet und zwischen den einander überlappenden Randstreifen (24, 26) des Schlauches und den Streifen (30, 40, 50, 60) definiert ist; einer gemeinsamen Wandung (16) aus dem besagten glatten Material, welche Wandung sowohl dem besagten Haupt-Versorgungskanal (12) als auch dem Durchflußkanal (18, 19, 20) zugeordnet ist; einer Reihe von in Längsrichtung beabstandeten Einlaßeinrichtungen (36) zur Bildung einer flüssigkeitsdurchgängigen Verbindung zwischen dem Haupt-Versorgungskanal (12) und dem langgestreckten Durchflußkanal (18); und aus einer Reihe von in Längsrichtung beabstandeten Auslaßeinrichtungen (66) zum Ausgeben der Flüssigkeit aus dem besagten Durchflußkanal auf die Außenseite des Schlauches, dadurch gekennzeichnet, daß zumindest drei Streifen (30, 40, 50, 60) vorgesehen sind, von welchen sich jeder in Längsrichtung über die gesamte Länge des besagten Schlauches erstreckt und die zumindest zwei Durchflußkanäle (18, 19, 20) definieren, welche in einer gemeinsamen Ebene nebeneinanderliegend ausgerichtet sind, sich kontinuierlich und ununterbrochen über die gesamte Länge des besagten Schlauches erstrecken, im wesentlichen parallel zueinander und im wesentlichen gleich weit von der Längsachse des Schlauches entfernt sind und wobei zumindest einer davon ein strömungsbegrenzender Kanal ist, wobei weiters die Streifen gebildet sind durch einen ersten Streifen (30), zumindest einen weiteren Streifen (50, 60) und einen ersten Satz von sich in Längsrichtung erstreckenden, voneinander abgegrenzten Streifen (40) mit einander benachbarten Enden, welche Enden der voneinander abgegrenzten Streifen (40) voneinander beabstandet sind, um eine über die gesamte Länge des Schlauches verlaufende Reihe von in Längsrichtung beabstandeter Flüssigkeits-Durchlaßöffnungen (46, 56) zwischen dem einen Durchflußkanal (18) der besagten zumindest zwei Durchflußkanäle zu bilden, wobei der Durchflußkanal (18) zumindest teilweise durch den ersten Streifen (30) und die erste Reihe von Streifen (40) und der zumindest eine andere Durchflußkanal (19, 20) zumindest teilweise durch die erste Reihe von Streifen (40) und zumindest einen weiteren Streifen (50, 60) gebildet ist, und wobei die besagten Einlaßeinrichtungen (36) die flüssigkeitsdurchgängige Verbindung zwischen dem Haupt-Versorgungskanal (12) und dem einen Durchflußkanal (18) und die besagten Auslaßeinrichtungen (66) die flüssigkeitsdurchgängige Verbindung zwischen dem zumindest einen weiteren Durchflußkanal (19, 20) und der Außenseite des Schlauches bilden.

2. Schlauch gemäß Anspruch 1, dadurch gekennzeichnet, daß die Auslaßeinrichtung eine Vielzahl von Auslaßstellen (66) umfaßt, welche nebeneinanderliegend entlang der gesamten Länge des Schlauches angeordnet sind.

3. Schlauch gemäß Anspruch 2, dadurch gekennzeichnet, daß jede der Auslaßstellen (66) Flüssigkeit aus zwei einander entgegengesetzten Richtung innerhalb des Kanals (20) erhält.

4. Schlauch gemäß Anspruch 1, dadurch gekennzeichnet, daß die Einlaßeinrichtung eine Vielzahl von ersten Flüssigkeits-Einlaßstellen (36) und die Auslaßeinrichtung eine Vielzahl von Flüssigkeits-Auslaßstellen (66) umfaßt.

5. Schlauch gemäß Anspruch 4, dadurch gekennzeichnet, daß zumindest drei einander benachbart angeordnete erste Einlaßstellen (36) eine der besagten Auslaßstellen (66) mit Flüssigkeit versorgen.

6. Schlauch gemäß Anspruch 4, dadurch gekennzeichnet, daß jede erste Einlaßstelle (36) in flüssigkeitsdurchlässiger Verbindung mit zumindest drei Auslaßstellen ist.

7. Schlauch gemäß Anspruch 4, dadurch gekennzeichnet, daß zumindest ein weiterer Streifen ein weiteres Wandelement (63) bildet, welches die anderen Kanäle von der Außenseite des Schlauches trennt und wobei die besagten Auslaßstellen (66) im besagten weiteren Wandelement definiert sind.

8. Schlauch gemäß Anspruch 4, dadurch gekennzeichnet, daß der strömungsbegrenzende Kanal (19, 20) in eine Vielzahl von benachbarten strömungsbegrenzenden Segmenten (19A, 19B, 20A, 20B) unterteilt ist, wobei jedes der besagten Segmente durch die Länge des Kanals zwischen der Stelle in einem der den Kanal definierenden beiden Streifen und der nächstliegenden Stelle im anderen der beiden Streifen definiert ist.

9. Schlauch gemäß Anspruch 8, dadurch gekennzeichnet, daß jedes der benachbarten Segmente (19A, 19B, 20A, 20B) eine gemeinsame Stelle (56A, 66A) zum Erhalt des Flusses von Flüssigkeit durch die zwei benachbarten Segmente miteinander teilen.

10. Schlauch gemäß einem der Ansprüche 1 bis 9, dadurch gekennzeichnet, daß einer der besagten strömungsbegrenzenden Kanäle (18, 19, 20) Einrichtungen (170) zur Veränderung des Querschnittes im besagten Kanal in Anpassung an den Druckunterschied zwischen dem Haupt-Versorgungskanal und dem besagten Kanal enthält.

11. Schlauch gemäß Anspruch 1, dadurch gekennzeichnet, daß zumindest zwei Kanäle erste, zweite und dritte langgestreckte strömungsbegrenzende Kanäle (18, 19, 20) umfassen, welche im wesentlichen parallel zu, im wesentlichen im gleichen Abstand von der Längsachse des Schlauches und auf der Außenseite des Haupt-Versorgungskanals (12) angeordnet sind, wobei die besagte gemeinsame Wandung (16) ein erstes Wandelement (33) umfaßt, das den Haupt-Versorgungskanal (12) vom ersten Kanal trennt, wobei der Schlauch weiters ein zweites Wandelement (43), das durch die erste Reihe der den ersten und zweiten Kanal (18, 19) voneinander trennenden Streifen (40) gebildet ist, und bin drittes Wandelement (53) umfaßt, welches den zweiten und dritten Kanal (19, 20) voneinander trennt, wobei die Einlaßeinrichtung (36) erste Flüssigkeits-Durchlaßstellen im ersten Wandelement (33) für die flüssigkeitsdurchlässige Verbindung des Haupt-Versorgungskanals (12) mit dem ersten Kanal (18) umfaßt, die Flüssigkeits-Durchlaßstellen zweite Flüssigkeits-Durchlaßstellen (46) im besagten zweiten Wandelement (43) zur flüssigkeitsdurchlässigen Verbindung des ersten Kanals (18) mit dem zweiten Kanal (19) umfaßt, die Auslaßeinrichtung dritte Flüssigkeits-Durchgangsstellen (56) im dritten Wandelement (53) zur flüssigkeitsdurchlässigen Verbindung des zweiten Kanals (19) mit dem dritten Kanal (20) sowie die Auslaßstellen (66) aus dem dritten Kanal (20) auf die Außenseite des Schlauches umfassen.

12. Schlauch gemäß Anspruch 11, dadurch gekennzeichnet, daß daß der Fluß von jeder Einlaßstelle (36) einen Teil des Gesamtflusses beiträgt, der durch jeden der zumindest drei Auslaßstellen (66) tritt.

13. Schlauch gemäß Anspruch 11, dadurch gekennzeichnet, daß zumindest zwei der besagten ersten, zweiten und dritten Wandelemente (33, 43, 53) eine Vielzahl von langgestreckten Streifen (30, 40, 50) umfaßt, welche Streifen in Längsrichtung hintereinander über die Länge des Schlauches angeordnet sind, wobei die Enden der besagten Streifen zur Bildung der besagten Flüssigkeits-Durchlaßstellen voneinander beabstandet sind.

14. Schlauch gemäß Anspruch 11, dadurch gekennzeichnet, daß er zumindest ein viertes Wandelement (63) umfaßt, welches den dritten Kanal (20) von der Außenseite des Schlauches trennt und wobei die Auslaßstellen (66) in dem besagten vierten Wandelement (63) vorgesehen sind.

15. Schlauch gemäß Anspruch 11, dadurch gekennzeichnet, daß jeder der strömungsbegenzenden Kanäle (18, 19, 20) in eine Vielzahl von benachbarten strömungsbegrenzenden Segmenten (18A, 18B, etc.) unterteilt ist, wobei jedes der besagten Segmente durch die Länge des Kanals zwischen den Stellen in einem der zwei mit dem Kanal assoziierten Wandelemente und der nächstliegenden Stelle im anderen der Wandelemente definiert ist.

16. Schlauch gemäß Anspruch 1, dadurch gekennzeichnet, daß er im strömungsbegrenzenden Kanal und beabstandet von der gemeinsamen Wandung (16) Einrichtungen (70, 170) zur Kompensation des Druckverlustes im besagten Kanal definiert hat.

17. Schlauch gemäß Anspruch 4, dadurch gekennzeichnet, daß die Strömungslänge zwischen einer der ersten Einlaßstellen und einer der besagten Auslaßstellen größer ist als die Distanz zwischen benachbarten Auslaßstellen.

18. Schlauch gemäß Anspruch 4, dadurch gekennzeichnet, daß das Verhältnis der Anzahl der Auslaßstellen zur Anzahl der Einlaßstellen größer ist als 2:1.

19. Schlauch gemäß einem der vorhergehenden Ansprüche, dadurch gekennzeichnet, daß ein Hauptanteil des Druckabfalles zwischen dem Haupt-Versorgungskanal und den besagten Auslaßstellen innerhalb des zumindest einen strömungsbegrenzenden Kanals auftritt.

20. Schlauch gemäß einem der Ansprüche 1 bis 18, dadurch gekennzeichnet, daß ein Hauptanteil des Druckabfalles zwischen dem Haupt-Versorgungskanal und den besagten Auslaßstellen über die Einlaßstellen auftritt.

21. Schlauch gemäß Anspruch 1, dadurch gekennzeichnet, daß die die strömungsbegrenzenden Kanäle definierenden inneren und äußeren Randstreifen des glatten Materials keine Flüsigkeits-Durchlaßöffnungen aufweisen.

22. Schlauch gemäß Anspruch 4, dadurch gekennzeichnet, daß jede Einlaß- und Auslaßstelle (36, 66) eine Vielzahl von nahe beieinanderliegenden Einlaß- und Auslaßöffnungen (36, 66) umfaßt, welche bezüglich ihrer Größe und Anzahl ausreichend sind, um die Gefahr des Verstopfens der Stelle zu minimieren.

23. Schlauch gemäß Anspruch 4, dadurch gekennzeichnet, daß der gesamte Wasserfluß durch jede Flüssigkeits-Durchlaßstelle und der gesamte Wasserfluß durch den strömungsbegrenzenden Kanal in einer im wesentlichen zur Längsachse des Schlauches äquidistanten Ebene stattfindet.

24. Schlauch gemäß Anspruch 14, dadurch gekennzeichnet, daß das vierte Wandelement (63) durch eine Vielzahl von langgestreckten Streifen (60) definiert ist, welche in Längsrichtung hintereinander entlang der Länge des Schlauches angeordnet sind, wobei die Längsachse jedes Streifens der besagen Vielzahl im wesentlichen parallel zur Längsachse des Schlauches ist und die Enden der Streifen zur Bildung der besagten Auslaßstellen (66) voneinander beabstandet sind.

25. Schlauch gemäß Anspruch 4, dadurch gekennzeichnet, daß die Länge des Fließweges von einer ersten Flüssigkeits-Durchlaßstelle zur nächstliegenden Auslaßstelle zumindest doppelt so lang ist wie die Distanz zwischen benachbarten Auslaßstellen.

26. Schlauch gemäß Anspruch 4, dadurch gekennzeichnet, daß die Flußrate aus jeder Auslaßstelle durch das Verhältnis zwischen der Anzahl der Auslaßstellen zur Anzahl der ersten Flüssigkeits-Durchlaßstellen gemeinsam mit der Querschnittsfläche des strömungsbegrenzenden Kanals und der gesamten Länge des Fließweges innerhalb der strömungsbegrenzenden Kanäle bestimmt ist.

27. Schlauch gemäß Anspruch 1, dadurch gekennzeichnet, daß der erste Streifen (30) ein undurchbrochener Streifen ist und die Einlaßeinrichtungen (36A) im überlappenden Randstreifen (24) des glatten Materials (22) vorgesehen sind.

28. Schlauch gemäß Anspruch 1, dadurch gekennzeichnet, daß die Einlaßeinrichtungen (36) im ersten Streifen (30) vorgesehen sind.

## Revendications

1. Tuyau de distribution de fluide allongé destiné à être utilisé dans un système de distribution de fluide, ledit tuyau comprenant : un matériau plan allongé (22) imperméable à l'eau, comportant des parties marginales s'étendant longitudinalement, ledit matériau étant replié sur lui-même de manière que lesdites parties marginales se recouvrent en définissant ainsi des parties marginales intérieure et extérieure (24, 26) ; au moins deux moyens formant bandes (30, 40, 50, 60) s'étendant longitudinalement, disposés entre lesdites parties marginales (24, 26) qui se recouvrent et fixés à ces parties marginales, et chacun s'étendant longitudinalement sur la totalité de la longueur dudit tuyau, et étant disposé près, mais à distance, de l'autre, l'axe longitudinal de chaque moyen formant bande étant sensiblement parallèle à l'axe longitudinal (A) dudit tuyau et sensiblement équidistant à cet axe ; un canal de distribution principal discret (12) adapté pour une communication de fluide avec une source de fluide sous pression, un premier (30) desdits moyens formant bandes et ledit matériau (22) définissant ledit canal d'alimentation principal discret ; au moins un premier passage d'écoulement allongé discret (18, 19, 20) assurant un passage de restriction d'écoulement qui est continu et ininterrompu sur la totalité de la longueur dudit tuyau, ledit passage d'écoulement étant disposé sur l'extérieur dudit canal d'alimentation principal et étant défini entre lesdites parties marginales qui se recouvrent (24, 26) du tuyau et lesdits moyens formant bandes (30, 40, 50, 60) ; une paroi commune (16) formée dudit matériau plan, ladite paroi étant partagée par ledit canal d'alimentation principal (12) et ledit passage d'écoulement discret (18, 19, 20) ; une série de moyens d'entrée espacés longitudinalement (36) pour assurer une communication de fluide entre ledit canal d'alimentation principal discret (12) et ledit passage d'écoulement allongé discret (18) ; et une série de moyens de sortie (66), espacés longitudinalement, pour le passage du fluide depuis ledit passage d'écoulement jusqu'à l'extérieur dudit tuyau, **caractérisé** en ce qu'il comprend au moins trois moyens formant bandes (30, 40, 50, 60), s'étendant chacun longitudinalement sur la totalité de la longueur dudit tuyau et définissant au moins deux passages d'écoulement allongés discrets (18, 19, 20) qui sont alignés dans un plan commun et qui sont continus et ininterrompus sur la totalité de la longueur dudit tuyau et sont sensiblement parallèles à l'axe longitudinal du tuyau et équidistants à cet axe et dont au moins un est un passage de restriction d'écoulement, et lesdits moyens formant bandes comprenant une première bande (30), au moins une autre bande (50, 60) et un premier ensemble de bandes discrètes (40) s'étendant longitudinalement et disposées bout à bout, les extrémités desdites bandes discrètes (40) étant espacées l'une de l'autre de manière à définir sur la totalité de la longueur dudit tuyau une série de points de passage de fluide espacés longitudinalement (46, 56) entre le premier (18) des deux passages d'écoulement précités qui est formé en partie par ladite première bande (30) et par ledit premier ensemble de bandes (40) et le second (19, 20) des deux passages d'écoulement précités qui est formé en partie par ledit premier ensemble de bandes (40) et ladite autre bande (50, 60), ledit moyen d'entrée (36) assurant une communication de fluide entre ledit canal de distribution principal discret (12) et ledit premier passage d'écoulement (18) et ledit moyen de sortie (66) assurant une communication de fluide entre ledit second passage (19, 20) et l'extérieur dudit tuyau.

2. Tuyau selon la revendication 1, dans lequel ledit moyen de sortie comprend une pluralité de points de sortie de décharge (66) disposés l'un près de l'autre le long de la totalité de la longueur du tuyau.

3. Tuyau selon la revendication 2, dans lequel chacun desdits points de sortie (66) reçoit du fluide depuis deux directions opposées à l'intérieur dudit passage (20).

4. Tuyau selon la revendication 1, dans lequel ledit moyen d'entrée comprend une pluralité de premiers points d'entrée de passage de fluide (36) et ledit moyen de sortie comprend une pluralité de points de sortie de passage de fluide (66).

5. Tuyau selon la revendication 4, dans lequel au moins trois premiers points d'entrée (36) disposés de façon adjacente contribuent à distribuer le fluide à un premier desdits points de sortie (66).

6. Tuyau selon la revendication 4, dans lequel chacun desdits premiers points d'entrée (36) est en communication de fluide avec au moins trois desdits points de sortie.

7. Tuyau selon la revendication 4, dans lequel ladite autre bande est un autre élément formant paroi (63) séparant l'autre desdits passages de l'extérieur dudit tuyau, et dans lequel lesdits points de sortie de décharge (66) sont définis dans ledit autre élément formant paroi.

8. Tuyau selon la revendication 4, dans lequel ledit passage de restriction d'écoulement (19, 20) est divisé en une pluralité de segments de restriction d'écoulement (19A, 19B, 20A, 20B), chacun desdits segments étant défini par la longueur dudit passage entre le point dans un premier des deux moyens formant bandes définissant ledit passage et le point le plus près de l'autre des deux moyens formant bandes.

9. Tuyau selon la revendication 8, dans lequel chacun des deux segments adjacents (19A, 19B, 20A, 20B) partage un point commun (56A, 66A) pour recevoir l'écoulement de fluide à travers les deux segments adjacents précités.

10. Tuyau selon l'une quelconque des revendications 1 à 9, dans lequel le premier des passages de restriction d'écoulement précités (18, 19, 20) comprend un moyen (170) pour modifier la section droite dudit passage en réponse à une différence de pression entre ledit canal de distribution principal et ledit passage.

11. Tuyau selon la revendication 1, dans lequel les deux passages précités comprennent des premier, second et troisième passages d'écoulement allongés (18, 19, 20), sensiblement parallèles à l'axe longitudinal du tuyau et à égale distance de celui-ci et disposés sur l'extérieur du canal d'alimentation principal (12), et dans lequel ladite paroi commune (16) comprend un premier élément formant paroi (33) séparant ledit canal d'alimentation principal (12) et ledit premier passage, ledit tuyau comprenant, en outre, un second élément formant paroi (43) défini par ledit premier ensemble de bandes (40) séparant lesdits premier et second passages (18, 19), un troisième élément formant paroi (53) séparant lesdits second et troisième passages (19, 20), un troisième élément formant paroi (53) séparant lesdits second et troisième passages (19, 20),
ledit moyen d'entrée (36) comprenant des premiers points de passage de fluide dans ledit premier élément formant paroi (33) en vue d'une communication de fluide entre ledit canal d'alimentation principal (12) et ledit premier passage (18),
lesdits points de passage de fluide comprenant des seconds points (46) de passage de fluide dans ledit second élément formant paroi (43) en vue d'une communication de fluide entre ledit premier passage (18) et ledit second passage (19),
ledit moyen de sortie comprenant des troisièmes points de passage de fluide (56) dans ledit troisième élément formant paroi (53) en vue d'une communication de fluide entre ledit second passage (19) et ledit troisième passage (20) et des points de sortie de passage de fluide de décharge (66) depuis ledit troisième passage (20) jusqu'à l'extérieur du tuyau.

12. Tuyau selon la revendication 11, dans lequel l'écoulement à partir de chaque point d'entrée (36) distribue une partie de l'écoulement total qui traverse chacun des troisièmes points de sortie (66).

13. Tuyau selon la revendication 11, dans lequel au moins deux desdits premier, second et troisième éléments formant parois (33, 43, 53) comprennent une pluralité de bandes allongées (30, 40, 50) placées dans le sens de la longueur, l'un à proximité de l'autre, sur la totalité de la longueur du tuyau, les extrémités desdites bandes étant espacées l'une de l'autre de manière à définir lesdits points de passage de fluide.

14. Tuyau selon la revendication 11, comprenant en outre un quatrième élément formant paroi (63) séparant ledit troisième passage (28) de l'extérieur dudit tuyau, et dans lequel lesdits points de sortie de décharge (66) sont définis dans ledit quatrième élément formant paroi (63).

15. Tuyau selon la revendication 11, dans lequel chacun des passages de restriction d'écoulement (18, 19, 20) est divisé en une pluralité de segments de restriction d'écoulement adjacents (18A, 19A, etc.), chacun desdits segments étant défini par la longueur dudit passage entre les points de passage dans l'un des deux éléments formant paroi associé au passage et le point de passage le plus proche de l'autre des deux éléments formant paroi.

16. Tuyau selon la revendication 1, comprenant en outre des moyens (70, 170) définis dans ledit passage de restriction d'écoulement et espacés de ladite paroi commune (16) en vue d'une compensation pour la perte de pression à l'intérieur dudit passage.

17. Tuyau selon la revendication 4, dans lequel la longueur d'écoulement entre l'un desdits premiers points d'entrée et l'un desdits points de sortie est supérieure à la distance entre les points de sortie adjacents.

18. Tuyau selon la revendication 4, dans lequel le rapport du nombre des points de sortie au nombre des points d'entrée est supérieur à 2:1.

19. Tuyau selon l'une quelconque des revendications précédentes, dans lequel une partie principale de la chute de pression entre ledit canal de distribution principal et lesdits points de sortie a lieu à l'intérieur dudit premier passage de restriction d'écoulement.

20. Tuyau selon l'une quelconque des revendications 1 à 18, dans lequel la majeure partie de la chute de pression entre ledit canal d'alimentation principal et lesdits points de sortie a lieu en travers desdits points d'entrée.

21. Tuyau selon la revendication 1, dans lequel les marges intérieure et extérieure du matériau plan définissant les passages de restriction d'écoulement ne comportent pas d'ouvertures de passage de fluide.

22. Tuyau selon la revendication 4, dans lequel chaque point d'entrée et de sortie (36, 66) comprend une pluralité d'ouvertures d'entrée et de sortie espacées étroitement (36, 66) en nombre et en dimension suffisants pour qu'il se produise un minimum de colmatage en travers des points de passage.

23. Tuyau selon la revendication 4, dans lequel tout écoulement d'eau à travers chaque point de passage de fluide et tout écoulement d'eau à travers ledit passage de restriction d'écoulement a lieu dans un plan sensiblement équidistant de l'axe longitudinal dudit tuyau.

24. Tuyau selon la revendication 14, dans lequel ledit quatrième élément formant paroi (63) est défini par une pluralité de bandes allongées (60) disposées dans le sens longitudinal, bout à bout, sur la totalité de la longueur du tuyau, l'axe longitudinal de chaque bande de ladite pluralité de bandes étant sensiblement parallèle et essentiellement équidistant à cet axe, les extrémités desdites bandes étant espacées l'une de l'autre de manière à définir lesdits points de sortie de décharge (66).

25. Tuyau selon la revendication 4, dans lequel la longueur du trajet d'écoulement depuis un premier point de passage de fluide jusqu'à son point de passage de fluide de décharge le plus proche est égale à au moins deux fois la distance entre les points de décharge adjacents.

26. Tuyau selon la revendication 4, dans lequel le débit à partir de chaque point de décharge est réglé par le rapport du nombre de points de décharge au nombre de premiers points de passage de fluide en même temps que par la superficie de section droite du passage de restriction d'écoulement et la longueur totale du trajet d'écoulement à l'intérieur desdits passages de restriction d'écoulement.

27. Tuyau selon la revendication 1, dans lequel ladite première bande (30) comprend une bande d'une seule pièce et ledit moyen d'entrée (36A) se trouve dans ladite marge recouvrante (24) dudit matériau plan (22).

28. Tuyau selon la revendication 1, dans lequel ledit moyen d'entrée (36) se trouve dans ladite première bande (30).
